Europäisches Patentamt

European Patent Office

Office européen des brevets

(11) Publication number: **0 145 269**
**B1**

(12) **EUROPEAN PATENT SPECIFICATION**

(45) Date of publication of patent specification: **10.08.88**

(21) Application number: **84307698.5**

(22) Date of filing: **07.11.84**

(51) Int. Cl.⁴: **C 08 G 18/10,** C 09 D 3/72,
C 08 G 18/08

(54) **Polyurethane coating compositions.**

(30) Priority: **07.11.83 GB 8329714**

(43) Date of publication of application:
**19.06.85 Bulletin 85/25**

(45) Publication of the grant of the patent:
**10.08.88 Bulletin 88/32**

(84) Designated Contracting States:
**BE DE FR GB IT NL SE**

(56) References cited:
DE-A-1 595 809
FR-A-2 071 413
FR-A-2 277 862
GB-A-1 537 039
US-A-3 457 225

(73) Proprietor: **COSTAIN STREETER LINING
LIMITED**
**111 Westminster Bridge Road**
**London SE1 7EU (GB)**

(72) Inventor: **Hosgood, Henry David**
**39 Glenville Road Warkford**
**Christchurch Dorset (GB)**

(74) Representative: **Bankes, Stephen C. D. et al**
**Baron & Warren 18 South End Kensington**
**London W8 5BU (GB)**

Courier Press, Leamington Spa, England.

## 0 145 269

**Description**

This invention relates to materials for use in coating tubes and pipes and more especially to the coating of pipes such as sewerage mains the surfaces of which have become damaged by prolonged use.

Various coating compositions and methods have been proposed wherein a polyisocyanate and a polyol are mixed prior to application to form a polyurethane coating which then cures in situ. For example, GB—A—1537039 provides a method for coating non-horizontal surfaces, or the undersides of horizontal surfaces, which comprises applying to the surface a non-foaming composition comprising (a) a polyisocyanate and an isocyanate-reactive compound or an isocyanate-group containing urethane prepolymer, (b) water, (c) an alkali metal compound capable of reacting with carbon dioxide to reduce frothing and (d) an inert, particulate filler in an amount from 50% by weight to 20 times the weight components (a) and (b).

Another polyisocyanate/polyol system is disclosed in GB—A—1501858, wherein the reactive components are emulsified with an aqueous solution of an alkali metal silicate.

The system of the present invention is essentially based upon the formation in contact with the internal surface of the pipe or main of a cured polyurethane coating employing an aqueous emulsion of previously emulsified polyols and an isocyanate terminated polyurethane prepolymer which are only brought into contact in a mixing device and then sprayed on to the already cleaned surface of the pipe to be treated. Additional ingredients are incorporated into one or both of the components being sprayed when it is desired to control the thickness and/or uniformity of the resulting coating and also for controlling the physical properties of the applied coating.

Accordingly the present invention provides a two-part coating kit comprising first and second compositions to be mixed together in the presence of water to form a sprayable reaction mixture which is cured in situ to form a polyurethane coating, wherein the first composition comprises:

i) a water dispersible alkaline material which reacts with carbon dioxide;

ii) at least one polyol having primary hydroxyl groups which is resistant to hydrolysis under alkaline conditions;

iii) a first inert reinforcing inorganic particulate filler and wherein the second composition comprises:

iv) an isocyanate-terminated polyurethane prepolymer derived from the reaction of one or more open chain polyols and a liquid polyisocyanate, said prepolymer being dissolved in an aprotic organic solvent;

v) additional liquid polyisocyanate and optionally

vi) a second particulate mineral filler which is substantially free from moisture, the first and second compositions being used in such proportions that components iv) and v) of the second composition are present in an amount which is at least sufficient to react with the polyols present in the first composition and that component i) is present in an amount sufficient to react with substantially all the carbon dioxide liberated by the reaction of water with excess isocyanate groups of components iv) and v);

characterised in that the first composition also includes

vii) an emulsifying agent or precursor thereof, the water dispersible alkaline material is calcium, strontium or barium oxide or hydroxide and the first composition comprises no more than 25 wt.% of the particulate inorganic filler (iii).

To prepare the final coating composition, the first composition is mixed with water to form an emulsion, which is mixed, immediately prior to spraying, with the second composition to form the final polyurethane coating. The mixing proportions should be such that the isocyanate terminated prepolymer and liquid polyisocyanate of the second composition are present in an amount which is at least sufficient to react with the polyols present in the first composition, leaving an excess of isocyanate groups which can react with the water present to form amino groups which in turn can take part in cross-linking reactions with further isocyanate groups.

It is preferred that the first composition also contains an inert reinforcing inorganic particulate material; this may act as a thixotropic agent when the first and second compositions have been admixed and the resulting mixture is being applied to the surface of the pipe being treated.

In one embodiment of the invention the first pack is admixed with water and the emulsion prepared at the work site before admixture with the second pack. This obviates the necessity of taking water to the site when it is already available there.

The water-dispersible alkaline material is preferably quick lime but it can also be strontium or barium oxide. When the emulsifying agent is casein the true emulsifying agent, which is then a salt of casein, is also formed at the work site before admixture of the first and second compositions occurs. In this case the casein is a precursor of the actual emulsifying agent. The proportion of the alkaline material is preferably 30 to 50 wt% of the first composition before water is added.

As already indicated the emulsifying agent, in the form of its precursor, is preferably casein. However other emulsifying agents can also be used in the first composition and there is no limitation as to the type, i.e. the emulsifying agent can be cationic, anionic or non-ionic in nature. Casein is however a preferred material on account of its ready availability and relatively low cost. The emulsifier is preferably used in an amount of 2—4 wt% of the first composition.

The polyols (ii) having primary hydroxyl groups which are resistant to hydrolysis under alkaline conditions are preferably polycaprolactones but may also be other materials such as liquid polyethylene

2

glycols and polyoxypropylene glycols. These materials should react with the polyisocyanate before the latter reacts with the water, since premature reaction of the polyisocyanate with water tends to plasticise the final product. Less resistant to hydrolysis under alkaline conditions are the polyester polyols derived from such acids as adipic and linoleic acids which may nevertheless be used. Mixtures of such materials may be used e.g. a mixture of polycaprolactones which consists of a diol and a triol.

The first composition preferably includes, in addition to the polyols mentioned above, a saturated water-soluble polyol having primary hydroxyl groups. Propylene glycol is preferred but other polyols have proved equally successful in practice including glycerine, ethylene glycol, butane diol, erythritol, dextrose and sucrose. Thus materials having both primary and secondary hydroxyl groups can be used.

The total content of polyols in the first composition is preferably 20 to 40 wt%.

The first inert reinforcing inorganic particulate material which may be, and preferably is, a constituent of the first composition, is present essentially as a reinforcing filler but may also impart other properties to the final product. Calcined china clay may be used and has the advantage that when dispersed in water, it produces a creamy thixotropic material. Thus when the mixture of the first and second composition containing calcined china clay is uniformly applied to the interior of a pipe undergoing treatment the thixotropic effect exerted ensures that the product remains in position and so gives a uniform final coating. A mixture of such reinforcing agents may be used. The filler is preferably used in amount of 10 to 25 wt% of the first composition, before water is added.

An additional ingredient which may be present in the first composition is a liquid epoxy resin. The liquid epoxy resin has also been found to behave as a reactive diluent. Suitable liquid epoxy resins may be obtained by the reaction of Bisphenol A with epichlorohydrin and may have an epoxide equivalent of 175—189. The epoxy resin may suitably be included in an amount up to 20 wt% of the first composition, before water is added.

Another additional ingredient which may be included in the first composition, suitably in an amount up to 2 wt%, is hydroxypropyl cellulose. This helps to provide the required thixotropy and to prevent separation during pumping.

A preservative for the emulsifier may also be included in the first composition, preferably in an amount not exceeding 1 wt%.

The isocyanate-terminated polyurethane prepolymer is usually derived by the reaction between a saturated open chain polyol and a liquid polyisocyanate. The polyisocyanate is preferably one which is sufficiently reactive to use without a catalyst and which also has a low vapour pressure at ambient temperatures. A convenient choice is diphenylmethane-4,4'-diisocyanate. The saturated open chain polyol preferably contains monocyclic aryl groups in the molecule and preferably contains secondary hydroxyl groups. It may conveniently be the reaction product of one molecule of diphenylolpropane with two molecules of 1,2-dihydroxypropane. Other aromatic polyols may also be used, as may high molecular weight (e.g. >1000) polyether diols. The liquid polyisocyanate should be present in excess so as to ensure a product containing terminal isocyanate groups. The reaction is carried out in a solvent for a polyurethane precursor which is free from reactive hydrogen atoms. Ester ethers of alkylene glycols such as ethylene glycol monoethyl ether acetate are eminently suitable for this purpose, as are aromatic aprotic solvents such as xylene.

To the solution of the polyurethane precursor there is added a polyisocyanate which is intended to react with the polyols in the first composition and is therefore added in a sufficient proportion to achieve this result when the two compositions are metered prior to mixing. Alternatively the same result may be achieved by adding enough diisocyanate to the polyol to ensure that a sufficient amount remains unreacted: the diisocyanate is best added in portions. The additional polyisocyanate reduces the viscosity of the second composition. The second composition is preferably made from 45 to 65 wt% of polyisocyanate, 12 to 25 wt% total of polyols, 3 to 6 wt% of filler and 15 to 35 wt% of solvent.

As mentioned above, the second composition preferably includes a particulate mineral filler which is at least substantially free from moisture. The filler is preferably an organo-modified fumed silica the surface of which has been rendered hydrophobic. Other particulate materials may be used so long as they are substantially free from moisture or have been pretreated so as to render them substantially free from moisture. This is necessary on account of the presence in the pack of unreacted polyisocyanate which, as already pointed out, is intended to react with the polyol components of the first pack after mixing has taken place. When the universal filler is an organo modified fumed silica it behaves as a thixotropic thickening agent in the final composition and also exerts a reinforcing effect.

Finally, the second composition may include a small amount (preferably not more than 0.1 wt.%) of a catalyst to promote the reaction of excess isocyanate groups with water.

It will be appreciated that three of the above discussed ingredients can impart thixotropic properties to the final mixture which is sprayed on to the cleaned surface of the pipe or tube undergoing treatment. When a uniformly coated pipe is desired, at least one of these ingredients should be present in one of the compositions and it is preferred that one should be present in each composition. Most preferably all three ingredients should be included in the two compositions.

The first composition, when water has been added, is one in which the aqueous phase of the resulting emulsion is the continuous phase. Sufficient water should be added to ensure this result. The first composition and the water are preferably mixed at a weight ratio from 3:7 to 7:3. When the first and second

**0 145 269**

compositions are mixed the second should be added to the first in a proportion which brings about an inversion of the emulsion so that the aqueous phase is discontinuously dispersed in a continuous organic phase of polyurethane prepolymer, solvent free from reactive hydrogen atoms and polyols. The presence of the ingredient or ingredients which impart thixotropic properties ensures that when the two compositions have been thoroughly mixed the emulsion having the continuous phase is a thixotropic one. This thixotropic emulsion is then sprayed on to the surface of the cleaned pipe or tube undergoing treatment and, due to its thixotropic properties, coats the area which it contacts and remains there. This ensures the application of a uniform coating. Coating of varying thickness can be applied in this way. Preferably the surface to be coated is the inside of a pipe and the coating is applied using a rotary sprayer.

The invention will be further illustrated in the following examples.

Example 1

Two compositions were made up as follows:—

First Composition (aqueous emulsion):

| Ingredients | Weight% |
| --- | --- |
| Water | 32.70 |
| Hydrated lime | 22.92 |
| Casein | 1.64 |
| Monopropylene glycol | 9.17 |
| Liquid Epoxy resin | 9.51 |
| Calcined china clay | 12.98 |
| Polycaprolactone Diol m.w 550 | 5.54 |
| Polycaprolactone Triol m.w 540 | 5.54 |

Second Composition:

| Ingredients | Weight% |
| --- | --- |
| Di-isocyanate | 52.05 |
| Secondary alcohol | 15.96 |
| Ethylene glycol monoethyl ether acetate | 27.76 |
| Modified fumed silica | 4.23 |

The polycaprolactone diol and triol used were materials sold under the trade names Capa® 200 and Capa® 305 respectively.

The liquid epoxy resin used was one sold under the trade name Grilon® 16—05.

The liquid di-isocyanate used was sold under the trade name Desmodur® VL and is reputed to be a commercial grade of diphenylmethane-4,4′-diisocyanate.

The secondary alcohol is sold under the trade name Dianol® 33 and is reputed to be a condensation product of diphenylolpropane with 2 molecules of 1,2-dihydroxypropane. It is readily soluble in ethylene glycol monoethyl ether acetate.

The diisocyanate and secondary alcohol were reacted in the proportion of four molecular proportions of diisocyanate to one molecular proportion of secondary alcohol thus producing an isocyanate terminated condensation product and an additional two molecular proportions of diisocyanate is added to the condensation product.

The modified fumed silica employed was one sold under the trade name Aerosil® R972 and has a hydrophobic surface. It has both thixotropic and reinforcing properties.

It has been found that a modest reduction can be made in the amount of lime used in the above formulation to bring about very slight foaming. This ensures that the possibility of shrinkage in the applied coating is eliminated. There are certain advantages in the use of quick lime which is slaked *in situ* as quick lime of more constant composition can be obtained and this enables closer control of the applied product to be secured.

4

The alkaline material reacts with carbon dioxide which is liberated by the reaction of water with isocyanate groups thus acting as a carbon dioxide scavenger. The isocyanate groups are those present in components of the second compositions. It will be apparent that the alkaline material may be present in a sufficient amount to react with all the carbon dioxide thus liberated or it may be slightly less than this amount so that very slight foaming can occur: this can eliminate the occurrence of shrinkage in the applied coating and thus afford better protection to the surface of the coated pipes and mains.

Example 2
The process of Example 1 was repeated for the following compositions:

First Composition (Aqueous Emulsion):

| Ingredients | Weight% |
|---|---|
| Water | 49.18 |
| Casein | 1.64 |
| Hydrated lime | 22.54 |
| Calcined china clay | 10.24 |
| Hydroxypropyl Cellulose | 0.34 |
| Non-Toxic preservative | 0.30 |
| Polycaprolactone triol (capa 305) | 15.76 |

Second Composition:

| Ingredients | Weight% |
|---|---|
| Diisocyanate (Desmodur VL) | 59.40 |
| Polyether diol | 7.39 |
| Secondary alcohol (Dianol 33) | 10.25 |
| Xylene | 17.95 |
| Modified fumed silica | 4.23 |
| Tertiary Amine Catalyst | 0.05 |

The polyether diol was a polyoxpropylene-based diol having a molecular weight of approximately 2000.

The non-toxic preservative was included in the first composition to stabilize the casein.

The catalyst in composition 2 was a highly specific tertiary amine catalyst sold by Union Carbide Corporation under the trade mark NIAX® A1.

Compared with the compositions of Example 1, those of Example 2 were found to have improved reactivity and to give a stronger, more elastic coating with improved structure. The composition as sprayed was also more hydrophobic and was therefore easier to use on wet surfaces.

The two compositions may be mixed and sprayed to form a coating, such as a self-supporting or structural lining within a sewer or other pipe to renovate the latter. The spray coating or lining may be applied to pipes which are too small in diameter to allow human access, for example by the remotely controlled apparatus disclosed in EP—A—0 145 266 filed on even date.

**Claims**

1. A two-part coating kit comprising first and second compositions to be mixed together in the presence of water to form a sprayable reaction mixture which is cured in situ to form a polyurethane coating, wherein the first composition comprises:

i) a water dispersible alkaline material which reacts with carbon dioxide;

ii) at least one polyol having primary hydroxyl groups which is resistant to hydrolysis under alkaline conditions;

iii) a first inert reinforcing inorganic particulate filler and wherein the second composition comprises:
iv) an isocyanate-terminated polyurethane prepolymer derived from the reaction of one or more open chain polyols and a liquid polyisocyanate, said prepolymer being dissolved in an aprotic organic solvent;
v) additional liquid polyisocyanate and optionally
vi) a second particulate mineral filler which is substantially free from moisture, the first and second compositions being used in such proportions that components iv) and v) of the second composition are present in an amount which is at least sufficient to react with the polyols present in the first composition and that component i) is present in an amount sufficient to react with substantially all the carbon dioxide liberated by the reaction of water with excess isocyanate groups of components iv) and v);
characterised in that the first composition also includes
vii) an emulsifying agent or precursor thereof, the water dispersible alkaline material is calcium, strontium or barium oxide or hydroxide and the first composition comprises no more than 25 wt.% of the particulate inorganic filler (iii).

2. A coating kit according to claim 1 wherein the first composition additionally comprises a second polyol having primary hydroxyl groups which is saturated and water-soluble.

3. A coating kit according to claim 1 or claim 2 wherein the first composition additionally comprises a liquid epoxy resin.

4. A coating kit according to any preceding claim wherein the first composition additionally comprises hydroxypropyl cellulose.

5. A coating kit according to any preceding claim wherein the first composition additionally comprises an inert reinforcing inorganic particulate material.

6. A coating kit according to claim 5 wherein said inorganic particulate material is calcined china clay.

7. A coating kit according to any preceding claim wherein said water-dispersible material (i) is quick lime.

8. A coating kit according to any preceding claim wherein said emulsifying agent is casein.

9. A coating kit according to any preceding claim wherein said polyol (ii) in the first composition comprises one or more polycaprolactones.

10. A coating kit according to any one of claims 1 to 8 wherein the polyol (ii) in the first composition comprises a polyoxypropylene glycol.

11. A coating kit according to any preceding claim wherein the first composition, before admixture with water, contains 30 to 50 wt.% of the alkaline material, 2 to 4 wt.% of the emulsifying agent, a total of 20 to 40 wt.% of polyols, 0 to 20 wt.% of liquid epoxy resin, 0 to 2 wt.% of hydroxypropyl cellulose, 10 to 25 wt.% of inorganic particulate filler and 0 to 1 wt.% of a non-toxic preservative for the emulsifier.

12. A coating kit according to any preceding claim wherein the polyisocyanate (iv) in the second composition is diphenylmethane-4,4' diisocyanate.

13. A coating kit according to any preceding claim wherein at least one said chain polyol from which the polyurethane prepolymer (iii) is derived contains one or more monocyclic aryl groups.

14. A coating kit according to any preceding claim wherein one of said open chain polyols from which the polyurethane prepolymer (iv) is derived is a high molecular weight polyether diol.

15. A coating kit according to any preceding claim wherein the solvent in the second composition is an ester ether of an alkylene glycol.

16. A coating kit according to any one of claims 1 to 14 wherein the solvent in the second composition is an aromatic hydrocarbon.

17. A coating kit according to any preceding claim wherein the particulate mineral filler is an organo-modified hydrophobic fumed silica.

18. A coating kit according to any preceding claim wherein the second composition also contains a catalyst for the reaction of the polyurethane prepolymer with water.

19. A coating kit according to any preceding claim wherein the second composition is made from 45 to 65 wt.% of polyisocyanate, 12 to 25 wt.% of polyol, 3 to 6 wt.% of particulate mineral filler, 0 to 0.1 wt.% of a catalyst to promote the reaction of the polyurethane with water and 15 to 35 wt.% of solvent.

20. A method of coating a surface using a coating kit according to any preceding claim, wherein the first composition is mixed with water to form an aqueous dispersion, the two compositions are mixed together in proportions such as to form an inverted emulsion with the aqueous phase dispersed in a continuous organic phase and the mixture is sprayed onto said surface.

21. A method according to claim 20 wherein the first composition and the water are mixed at a weight ratio from 3:7 to 7:3.

22. A method according to claim 20 or claim 21 wherein the surface to be coated is the inside of a pipe and the coating is applied using a rotary sprayer.

**Patentansprüche**

1. Zweikomponenten Beschichtungssatz, bestehend aus miteinander im Beisein von Wasser zu vermischende erste und zweite Zusammensetzungen, um eine sprühbare Reaktionsmischung zu bilden, die an Ort und Stelle zu einer Polyurethanbeschichtung aushärtet, wobei die erste Zusammensetzung aus

i) einem in Wasser fein verteilbaren, alkalischen Stoff, der mit Kohlendioxid reagiert,

ii) wenigstens einen mehrwertigen Alkohol mit primären Hydroxylgruppen, der gegenüber einer Hydrolyse unter basischen Bedingungen beständig ist,

iii) einem ersten reaktionsträgen, verstärkenden, aus Partikeln bestehenden anorganischen Füllstoff, und die zweite Zusammensetzung aus

iv) einem isocyanat-abgeschlossenen Polyurethan-Vorpolymerisat, abgeleitet aus der Reaktion eines einfach oder mehrfach offenen mehrwertigen Alkohols mit einem flüssigen Polyisocyanat, wobei das Vorpolymerisat in einem protonenfreien organischen Lösungsmittel gelöst ist,

v) einem zusätzlichen flüssigen Polyisocyanat und wahlweise aus

vi) einem zweiten aus Partikeln bestehenden Mineralfüllstoff, der im wesentlichen frei von Feuchtigkeit ist, besteht und beide Zusammensetzungen in einem solchen Mengenverhältnis zugegen sind, daß die Komponenten iv) und v) der zweiten Zusammensetzung wenigstens in einer solchen Menge vorhanden ist, die ausreicht, um mit den mehrwertigen Alkoholen der ersten Zusammensetzung zu reagieren, und daß die Komponente i) in einer solchen Menge vorhanden ist, um mit im wesentlichen dem ganzen Kohlendioxid zu reagieren, der bei der Reaktion von Wasser mit den überschüssigen Isocyanatgruppen der Komponenten IV) und V) freigesetzt wird,
dadurch gekennzeichnet, daß die erste Zusammensetzung auch ein

vii) Emulgierungsmittel oder einen Vorläufer davon enthält, daß der im Wasser fein verteilbare alkalische Stoff Kalzium, Strontium, Bariumoxid oder Hydroxid ist und daß die erste Zusammensetzung zu nicht mehr als 25 Gew.% des aus Partikeln bestehenden Füllstoffs iii) besteht.

2. Beschichtungssatz nach Anspruch 1, bei dem die erste Zusammensetzung zusätzlich aus einem zweiten mehrwertigen Alkohol mit primären Hydroxylgruppen besteht, der gesättigt und wasserlöslich ist.

3. Beschichtungssatz nach Anspruch 1 oder 2, bei dem die erste Zusammensetzung zusätzlich aus einem flüssigen Epoxyharz besteht.

4. Beschichtungssatz nach einem der Ansprüche 1 bis 3, bei dem die erste Zusammensetzung zusätzlich aus Hydroxypropylcellulose besteht.

5. Beschichtungssatz nach einem der Ansprüche 1 bis 4, bei dem die erste Zusammensetzung zusätzlich einen reaktionsträgen, verstärkenden anorganischen, aus Partikeln bestehenden Füllstoff besteht.

6. Beschichtungssatz nach Anspruch 5, bei dem der genannte anorganische, aus Partikeln bestehende Stoff i) gebrannter Porzellanton ist.

7. Beschichtungssatz nach einem der Ansprüche 1 bis 6, bei dem der in Wasser fein verteilbare Stoff i) gebrannter Kalk ist.

8. Beschichtungssatz nach einem der Ansprüche 1 bis 7, bei dem das Emulgierungsmittel Kasein ist.

9. Beschichtungssatz nach einem der Ansprüche 1 bis 8, bei dem der mehrwertige Alkohol (ii) in der ersten Zusammensetzung aus einem oder mehreren Polycaprolactonen besteht.

10. Beschichtungssatz nach einem der Ansprüche 1 bis 8, bei dem der mehrwertige Alkohol (ii) in der ersten Zusammensetzung aus einem Polyoxypropylenglykol besteht.

11. Beschichtungssatz nach einem der Ansprüche 1 bis 10, bei dem die erste Zusammensetzung vor der Beimengung von Wasser 30 bis 50 Gew.% von dem alkalischen Stoff, 2 bis 4 Gew.% von Emulgierungsmittel, insgesamt 20 bis 40 Gew.% von mehrwertigen Alkoholen, 0 bis 20 Gew.% vom flüssigem Epoxyharz, 0 bis 2 Gew.% von der Hydroxypropylcellulose, 10 bis 25 Gew.% vom anorganischen, aus Partikeln bestehenden Füllstoff und 0 bis 1 Gew.% eines nichttoxischen Konservierungsstoff für den Emulgator enthält.

12. Beschichtungssatz nach einem der Ansprüche 1 bis 11, bei dem das Polyisocyanat (iv) in der zweiten Zusammensetzung Diphenylmethan-4,4' Diisocyanat ist.

13. Beschichtungssatz nach einem der Ansprüche 1 bis 12, bei dem wenigstens einer genannten mehrwertigen Alkohole, von denen das Polyurethan — Vorpolymerisat (iv) abgeleitet ist, eine oder mehrere monozyklische Arylgruppen enthält.

14. Beschichtungssatz nach einem der Ansprüche 1 bis 13, bei dem einer der genannten mehrwertigen Alkohle, von denen das Polyurethan — Vorpolymerisat (iv) abgeleitet ist, ein Polyätherdiol mit hohem Molekulargewicht ist.

15. Beschichtungssatz nach einem der Ansprüche 1 bis 14, bei dem das Lösungsmittel in der zweiten Zusammensetzung ein Esteräther eines Alkylenglykols ist.

16. Beschichtungssatz nach einem der Ansprüche 1 bis 14, bei dem das Lösungsmittel in der zweiten Zusammensetzung ein aromatischer Kohlenwaserstoff ist.

17. Beschichtungssatz nach einem der Ansprüche 1 bis 16, bei dem der aus Partikeln bestehende Mineralfüllstoff ein organomodifiziertes hydrophobes verdampftes Siliziumdioxid ist.

18. Beschichtungssatz nach einem der Ansprüche 1 bis 17, bei dem die zweite Zusammensetzung auch einen Katalysator für die Reaktion des Polyurethan — Vorpolymerisats mit Wasser enthält.

19. Beschichtungssatz nach einem der Ansprüche 1 bis 18, bei dem die zweite Zusammensetzung aus 45 bis 65 Gew.% von Polyisocyanat, 12 bis 25 Gew.% von mehrwertigem Alkohol, 3 bis 6 Gew.% von aus Partikeln bestehenden Mineralfüllstoff, 0 bis 0,1 Gew.% eines Katalysators zum Fördern der Reaktion des Polyurethans mit Wasser und 15 bis 35 Gew.% von Lösungsmittel besteht.

20. Verfahren zum Beschichten einer Fläche unter Verwendung eines Beschichtungssatzes nach einem

7

der Ansprüche 1 bis 19, bei dem die erste Zusammensetzung mit Wasser zu einer wässrigen Dispersion vermischt wird, die zweite Zusammensetzung in einem Mengenverhältnis zusammengemischt wird, so daß sich eine invertierte Emulsion mit der wäßrigen Phase bildet, welche in einer kontinuierlichen organischen Phase fein verteilt ist, und die Mischung auf die genannte Fläche gespritzt wird.

21. Verfahren nach Anspruch 20, bei dem die erste Zusammensetzung und Wasser in einem Gewichtsverhältnis von 3:7 bis 7:3 vermischt werden.

22. Verfahren nach Anspruch 20 oder 21, bei dem die zu beschichtende Fläche die Innenseite einer Röhre bildet und die Beschichtung unter Verwendung eines Drehsprühers aufgebracht wird.

## Revendications

1. Préparation pour revêtement en deux parties comprenant une première et une seconde compositions destinées à être mélangées ensemble en présence d'eau pour former un mélange réactif pulvérisable qui est cuit in situ pour former un revêtement polyuréthane, la première composition comprenant:

I) un matériau alkalin dispersible dans l'eau qui réagit avec le dioxide de carbone;

II) au moins un alcool polyvalent ayant des groupes hydroxyles primaires, qui résiste à l'hydrolyse dans des conditions alkalines;

III) un premier matériau de remplissage particulaire inorganique de renforcement inerte, la seconde composition comprenant:

IV) un prépolymère polyuréthane terminé par un isocyanate dérivé de la réaction d'un ou de plusieurs alcools polyvalents à chaîne ouverte et d'un polyisocyanate liquide, ledit prépolymère étant dissous dans un solvant organique exempt de protons;

V) un polyisocyanate liquide additionnel et optionnellement

VI) un second matériau de remplissage minéral particulaire qui est sensiblement exempt d'humidité, la première et la seconde compositions étant utilisées dans de telles proportions que les composants (IV) et (V) de la seconde composition sont présents dans une quantité qui est au moins suffisante pour réagir avec les alcools polyvalents présents dans la première composition et que le composant (I) est présent en quantité suffisante pour réagir avec sensiblement tout le dioxyde de carbone libéré par la réaction de l'eau avec les groupes isocyanate en excès des composants (IV) et (V);
caractérisé en ce que la première composition comporte également

(VII) un agent émulsifiant ou un précurseur de celui-ci, en ce que le matériau alkalin dispersible dans l'eau est un hydroxyde ou un oxyde de calcium, de strontium ou de baryum et en ce que la première composition ne comporte pas moins de 25% en poids de materiau de remplissage inorganique particulaire (III).

2. Préparation pour revêtement selon la revendication 1, où la première composition comporte additionnellement un second alcool polyvalent ayant des groupe hydroxyles primaires, qui est saturé et est soluble dans l'eau.

3. Préparation pour revêtement selon la revendication 1 ou la revendication 2, où la première composition comporte additionnellement une résine époxyde liquide.

4. Préparation pour revêtement selon une des revendications précédentes, où la première composition comporte additionnellement de la cellulose hydroxypropyle.

5. Préparation pour revêtement selon une des revendications précédentes, où la première composition comporte additionnellement un matériau particulaire inorganique de renforcement inerte.

6. Préparation pour revêtement selon la revendication 5, où ledit matériau particulaire inorganique est du kaolin calciné.

7. Préparation pour revêtement selon une des revendications précédentes, où ledit matériau dispersible dans l'eau (I) est de la chaux vive.

8. Préparation pour revêtement selon une des revendications précédentes, où ledit agent émulsifiant est de la caséine.

9. Préparation pour revêtement selon une des revendications précédentes où ledit alcool polyvalent (II) dans la première composition comporte un ou plusieurs polycaprolactones.

10. Préparation pour revêtement selon une des revendications 1 à 8, ou l'alcool polyvalent (II) dans la première composition comporte un glycol polyoxypropylène.

11. Préparation pour revêtement selon une des revendications précédentes, où la première composition, avant d'être mélangée avec de l'eau, contient 30 à 50% en poids de matériau alkalin, 2 à 4% en poids d'agent émulsifiant, un total de 20 à 30% en poids d'alcools polyvalents, 0 à 20% en poids de résine époxyde liquide, 0 à 2% en poids de cellulose hydroxypropyle, 10 à 25% en poids de matériau de remplissage inorganique et 0 à 1% en poids d'un agent conservateur non toxique pour l'émulsifiant.

12. Préparation pour revêtement selon une des revendications précédentes, où le polyisocyanate (IV) dans la seconde composition est du diisocyanate diphénylméthane-4,4'.

13. Préparation pour revêtement selon une des revendications précédentes, où au moins un des alcools polyvalents à chaîne duquel le prépolymère polyuréthane (III) est dérivé contient un ou plusieurs groupes aryle monocycliques.

14. Préparation pour revêtement selon une des revendications précédentes, où l'un desdits alcools

0 145 269

polyvalents à chaîne ouverte duquel le prépolymère polyuréthane (IV) est dérivé est un diol polyéther de poids moléculaire élevé.

15. Préparation pour revêtement selon une des revendications précédentes, où le solvant dans la seconde composition est un éther ester d'un glycole alkylène.

16. Préparation pour revêtement selon une des revendications 1 à 14, où le solvant dans la seconde composition est un hydrocarbure aromatique.

17. Préparation pour revêtement selon une des revendications précédentes, où le matériau de remplissage minéral particulaire est une silice fumée hydrophobe organo-modifiée.

18. Préparation pour revêtement selon une des revendications précédentes, où la seconde composition contient également un catalyseur pour la réaction du prépolymère polyuréthane avec l'eau.

19. Préparation pour revêtement selon une des revendications précédentes, où la seconde composition est faite de 45 à 65% en poids de polyisocyanate, 12 à 25% en poids d'alcool polyvalent, 3 à 6% en poids de matériau de remplissage minéral particulaire, de 0 à 0,1% en poids de catalyseur pour favoriser la réaction du polyuréthane avec l'eau et 15 à 35% en poids de solvant.

20. Préparation pour revêtement d'une surface avec la préparation pour revêtement selon une des revendications précédentes, où la première composition est mélangée avec de l'eau pour former une dispersion aqueuse, où les deux compositions sont mélangées ensemble dans des proportions telles qu'elles forment une émulsion inversée avec la phase aqueuse dispersée dans une phase organique continue et où le mélange est pulvérisé sur ladite surface.

21. Procédé selon la revendication 20, où la première composition et l'eau sont mélangées avec une proportion en poids allant de 3:7 à 7:3.

22. Procédé selon la revendication 20 ou la revendication 21, où la surface qui doit être recouverte est l'intérieur d'un tuyau et en ce que le revêtement est appliqué au moyen d'un pulvérisateur rotatif.

9